# EUROPÄISCHE PATENTSCHRIFT

(11) **EP 1 588 573 B1**
(45) Veröffentlichungstag und Bekanntmachung des Hinweises auf die Patenterteilung: **09.05.2007**
(21) Anmeldenummer: 04700681.2
(22) Anmeldetag: 08.01.2004
(51) Int. Cl.: H04Q 7/22

(54) **VERFAHREN UND SYSTEM ZUM EINFÜGEN EINES MULTIMEDIA-NACHRICHT-MEHRFACHELEMENTS IN EINE MULTIMEDIA-NACHRICHT**
METHOD AND SYSTEM FOR INSERTING A MULTIMEDIA MESSAGE MULTIPLE ELEMENT INTO A MULTIMEDIA MESSAGE
PROCEDE ET SYSTEME D'INTEGRATION D'UN ELEMENT MULTIPLE DE MESSAGE MULTIMEDIA DANS UN MESSAGE MULTIMEDIA

(30) Priorität: 31.01.2003 DE 10303958
(43) Veröffentlichungstag der Anmeldung: 26.10.2005
(73) Patentinhaber: SIEMENS AKTIENGESELLSCHAFT, 80333 München (DE)
(72) Erfinder: VAN NIEKERK, Sabine, 38228 Salzgitter (DE); SCHWAGMANN, Norbert, 38102 Braunschweig (DE); JERBI, Belhassen, 85560 Ebersberg (DE)
(86) Internationale Anmeldenummer: PCT/EP2004/000073
(87) Internationale Veröffentlichungsnummer: WO 2004/068878

(56) Entgegenhaltungen:
- EP-A- 1 107 618
- EP-A- 1 220 132
- EP-A- 1 261 180
- "3GPP TS 23.140 V6.0.0 (2002-12), 3rd Generation Partnership Project; Technical Specification Group Terminals; Multimedia Messaging Service (MMS); Functional description; Stage 2 (Release 6)" 3GPP TECHNICAL SPECIFICATION, 1. Dezember 2002 (2002-12-01), Seiten 1-155, XP002281428 SOFIA ANTIPOLIS, FR

## Beschreibung

Die vorliegende Erfindung betrifft ein Verfahren und ein System zum Einfügen mindestens eines Multimedia-Nachricht-Mehrfachelements in eine Multimedia-Nachricht.

Derartige Verfahren und Systeme können unter Anderem im Mobilfunk-Systemen der dritten Generation Anwendung finden.

Das Mobilfunksystem GSM (Global System for Mobile Communications) bietet neben der Sprachtelephonie auch die Möglichkeit, kurze Textnachrichten von bis zu 160 Zeichen Länge zu versenden bzw. zu empfangen. Dieser Nachrichtendienst ist als SMS (Short Message Service) bekannt. Für Mobilfunksysteme der nächsten Generation (2.5G und 3G), wie z.B. UMTS (Universal Mobil Telecommunications System), ist eine multimediafähige Variante eines mobilen Nachrichtendienstes, das sogenannte MMS (Multimedia Messaging Service) vorgesehen. Dieser MMS-Service wird in den technischen Spezifikationen TS 22.140 Version 4.1.0, Release, 4, und TS 23.140 Version 4.5.0, Release 4, des 3^{rd} Generation Partnership Project (3GPP) beschrieben.

In der EP 1 107 618 A2 wird ein Verfahren zur Übertragung und zum Empfang von Multimedia Daten auf der Basis von SMS-Nachrichten beschrieben.

Nachrichten mit multimedialen Inhalten werden nachfolgend zur besseren Abgrenzung von den Textnachrichten SMS als Multimedia-Nachrichten MM (Multimedia Message) bezeichnet. Im Gegensatz zu SMS entfällt dabei die Beschränkung auf reine Textinhalte. Bei MMs ist es möglich, Texte dem individuellen Geschmack entsprechend zu formatieren, sowie Audio- und Videoinhalte in eine Nachricht einzubetten. Eine MM kann demnach aus mehreren MM-Elementen von unterschiedlichen Dateitypen (z.B. Audio- oder Standbild) oder Dateiformaten (bei Standbild z.B. Graphic Interchange Format GIF oder Joint Photographic Experts Group JPEG) bestehen. Jede MM hat ein

Kopffeld (MM-Header), und jedes MM-Element hat zusätzlich noch ein eigenes Kopffeld (MM-Element-Header).

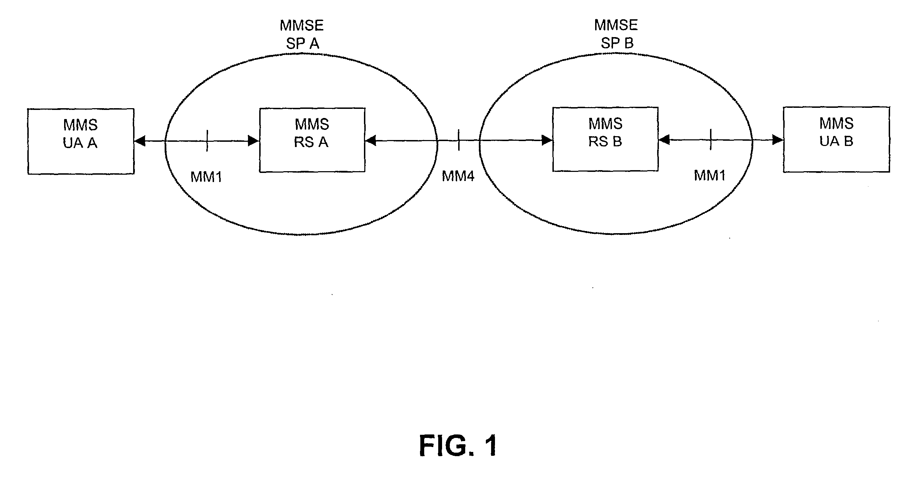

Figur 1 zeigt eine bekannte MMS-Netzwerk-Architektur mit zwei Netzen A und B aus der Sicht von 3GPP. MMS UA steht für einen sogenannten MMS-User Agent, d.h. ein Software-Programm, beispielsweise auf ein Mobilfunkgerät oder einem an einem Mobilfunkgerät angeschlossenen Gerät (z.B. Laptop oder Ähnlichem), welches die Funktionalitäten zu MMS realisiert. Solche Funktionalitäten können beispielsweise eine MM generieren, anschauen bzw. eine MM empfangen oder senden sein. MMS RS ist ein sogenannter MMS-Relay/Server, d.h. ein Netzwerkelement, welches im Zuständigkeitsbereich MMSE (Multimedia Messaging Service Environment), d.h. der Dienstleistungsumgebung des MMS-Dienstleisters MMSE SP (MMSE Service Providers) den MMS UAs die MMS-Funktionalität zur Verfügung stellt. MM1 und MM4 sind Schnittstellen.

Mobile Telekommunikationssysteme, wie z.B. GSM oder UMTS, nutzen definiert Karten, sogenannte Smart Cards, die man in ein Mobilfunkgerät einstecken muss, um die Dienste des Netzwerkbetreibers, bei dem man angemeldet ist, nutzen zu können. Ebenfalls werden Nutzereinstellungen und Personeninformationen (Telefonbuch, SMS etc.) auf dieser Karte gespeichert. Bei GSM wird diese Karte SIM (Subscriber Identity Module) genannt. Bei UMTS unterscheidet man zwischen der physikalischen Karte UICC (Universal Integrated Circuit Card) und ihrer logischen Funktionalität, der USIM (UMTS Subscriber Identity Module).

SAT (SIM Application Toolkit) bei GSM bzw. USAT (USIM Application Toolkit) bei UMTS ist ein Werkzeugsatz, der den Netzwerkbetreibern Schnittstellen, sogenannte APIs (Application Programming Interfaces) zur Programmierung von Anwendungen zur Verfügung stellt. USIM Application Toolkit werden beispielsweise in der technischen Spezifikation TS 31.111 Version 4.2.1, Release 4, des 3GPP beschrieben. Mit diesen APIs kann der Netzwerkbetreiber eigene Anwendungen auf der SIM bzw. UICC implementieren, die mit Hilfe von USAT auf Funktionalitäten des Mobilfunkgeräts zugreifen können - unabhängig vom Hersteller des Mobilfunkgeräts und Herstellers der Karte. Die SIM bzw. UICC ist die physikalische Basis für diesen Werkzeugsatz, da sie von den Netzwerkbetreibern bereitgestellt werden und somit nach deren Wünschen angepasst werden können.

Netzwerkbetreiber haben schon heute die Möglichkeit, MMs zusammen mit Werbenachrichten zu übertragen. Problematisch ist jedoch dabei, dass eine Übertragung von Werbenachrichten über die Luftschnittstelle erfolgen muss, so dass durch die Werbung Systemressourcen verbraucht werden.

Des Weiteren kann es vorkommen, dass ein MM-Element (z.B. eine Textdatei, Videodatei oder Musikdatei als Werbung) in mehrere MMs eingefügt werden soll, die alle zum gleichen MMS UA geschickt werden. Ein solches MM-Element, welches mehrfach in MMs eingefügt werden kann, wird nachfolgend als Multimedia-Nachricht-Mehrfachelement bezeichnet. In einem solchen Fall besteht wiederum der Nachteil, dass wertvolle Systemressourcen auf der Schnittstelle (die Teil der Schnittstelle MM1 in Figur 1 ist) genutzt werden, um wiederum die gleiche Information, d.h. das gleiche MM-Element, zum gleichen MMS UA zu übermitteln.

Somit liegt der vorliegenden Erfindung die Aufgabe zugrunde, ein Verfahren und ein System zum Einfügen mindestens eines Multimedia-Nachricht-Mehrfachelements in eine Multimedia-Nachricht bereitzustellen, durch welche die Systemressourcen eines Mobilfunksystems nicht unnötig belastet werden.

Diese Aufgabe wird durch ein Verfahren zum Einfügen mindestens eines Multimedia-Nachricht-Mehrfachelements in eine Multimedia-Nachricht mit den Merkmalen des Anspruchs 1 und ein System zum Einfügen mindestens eines Multimedia-Nachricht-Mehrfachelements in eine Multimedia-Nachricht mit den Merkmalen des Anspruchs 15 gelöst. Weitere Lösungen der Aufgaben stellen Mobilstationen gemäß den Ansprüchen 29 und 30 dar. Vorteilhafte Weiterbildungen der vorliegenden Erfindung ergeben sich aus den abhängigen Ansprüchen.

Das Verfahren zum Einfügen mindestens eines Multimedia-Nachricht-Mehrfachelements in eine Multimedia-Nachricht weist die Verfahrensschritte Senden mindestens eines Multimedia-Nachricht-Mehrfachelements von einem Netzwerkelement zu einer Mobilstation, Senden einer ersten Multimedia-Nachricht von dem Netzwerkelement zu der Mobilstation, und Einfügen des Multimedia-Nachricht-Mehrfachelements in die erste Multimedia-Nachricht, wobei das Multimedia-Nachricht-Mehrfachelement nur einmal von dem Netzwerkelement zu der Mobilstation gesendet wird und in der Mobilstation in eine Vielzahl von an die Mobilstation gesendeten Multimedia Nachrichten eingefügt wird auf.

Das System zum Einfügen mindestens eines Multimedia-Nachricht-Mehrfachelements in eine Multimedia-Nachricht weist Mittel zum Senden mindestens eines Multimedia-Nachricht-Mehrfachelements von einem Netzwerkelement zu einer Mobilstation, Mittel zum Senden einer ersten Multimedia-Nachricht von dem Netzwerkelement zu der Mobilstation und Mittel zum Einfügen des Multimedia-Nachricht-Mehrfachelements in die erste Multimedia-Nachricht auf wobei das Multimedia-Nachricht-Mehrfachelement nur einmal von dem Netzwerkelement zu der Mobilstation gesendet wird und in der Mobilstation in eine Vielzahl von an die Mobilstation gesendeten Multimedia Nachrichten eingefügt wird.

Bei dem Multimedia-Nachricht-Mehrfachelement kann es sich grundsätzlich um jede Art von Informationsdaten, insbesondere Werbedaten, wie beispielsweise Texte, Töne oder Videofilme handeln. Bei dem Netzwerkelement handelt es sich bevorzugt um eine Verbindungseinheit MMS RS, wie sie bereits beschrieben wurde, oder einem sogenannten VASP (Value Added Service Provider). Bei der Mobilstation kann es sich grundsätzlich um jede Art von mobilem Endgerät handeln, bevorzugt jedoch um eine UMTS-Mobilstation.

Das Einfügen erfolgt in der Mobilstation. Dies hat den Vorteil, dass Multimedia-Nachricht-Mehrfachelemente in der Mobilstation in einem Speichermittel gespeichert werden, und bei Bedarf einer oder mehreren Multimedia-Nachrichten jeweils hinzugefügt werden können.

Das Multimedia-Nachricht-Mehrfachelement wird nur einmal von dem Netzwerkelement zu der Mobilstation gesendet, und in eine Vielzahl von Multimedia-Nachrichten eingefügt. Durch diese Vorgehensweise werden Systemressourcen im Mobilfunksystem eingespart, da Multimedia-Nachricht-Mehrfachelemente nur einmal über die Luftschnittstelle übertragen werden müssen und sodann, eventuell nach einer Speicherung der Informationsdaten in einem Speicher in der Mobilstation, diese beliebig vielen weiteren Multimedia-Nachrichten hinzugefügt werden können, so dass der Nutzer der Mobilstation jeweils die ursprünglich Multimedia-Nachricht mit den jeweiligen Multimedia-Nachricht-Mehrfachelementen erhält.

Weiter bevorzugt ist das Multimedia-Nachricht-Mehrfachelement in der ersten gesendeten Multimedia-Nachricht enthalten. In dieser Ausführungsform kann das mit der ersten gesendeten Multimedia-Nachricht übertragene Multimedia-Nachricht-Mehrfachelement zusätzlich in weitere, d.h. später übermittelte, Multimedia-Nachrichten eingefügt werden.

In einer anderen Ausführungsform der vorliegenden Erfindung ist das Multimedia-Nachricht-Mehrfachelement in einer zweiten gesendeten Multimedia-Nachricht enthalten. Dabei wird eine gesonderte Multimedia-Nachricht, welche nur diese spezielle Multimedia-Nachricht-Mehrfachelement beinhaltet, über die Luftschnittstelle übertragen. "Zweite gesendete Multimedia-Nachricht" ist dabei nicht auf eine Reihenfolge der gesendeten Multimedia-Nachrichten beschränkt. Vielmehr bezieht sich vorliegend die "zweite gesendete Multimedia-Nachricht" auf eine weitere Multimedia-Nachricht, zur Unterscheidung von der ersten Multimedia-Nachricht.

In einer weiteren bevorzugten Ausführungsform der vorliegenden Erfindung werden eine Vielzahl von Multimedia-Nachricht-Mehrfachelementen in einer Multimedia-Nachricht von dem Netzwerkelement zu der Mobilstation gesendet. Dies hat den Vorteil, dass wiederum Systemressourcen eingespart werden und eine Vielzahl von Multimedia-Nachricht-Mehrfachelementen auf einmal zu einer Mobilstation übertragen werden können.

Weiter bevorzugt weist eine Multimedia-Nachricht ein erstes Informationsfeld auf, welches die Unterscheidung verschiedener Multimedia-Nachricht-Mehrfachelemente ermöglicht. Dieses erste Informationsfeld dient dazu, verschiedene Multimedia-Nachricht-Mehrfachelemente unterscheiden zu können. Denkbar ist, dass ein neues Multimedia-Nachricht-Element-Kopffeld in der Multimedia-Nachricht enthalten ist, welches eine Identifizierungsnummer, beispielsweise vom Netzwerkelement MMS RS vergeben, erhält.

Weiter bevorzugt weist eine Multimedia-Nachricht ein zweites Informationsfeld auf, durch welches ein Multimedia-Nachricht-Mehrfachelement einer Nachrichten-Gruppe zugeordnet werden kann. Damit Multimedia-Nachricht-Mehrfachelemente von normalen Multimedia-Nachricht-Elementen unterschieden werden können, können die Multimedia-Nachricht-Mehrfachelemente vom Netzwerkelement besonders gekennzeichnet werden. Denkbar ist, dass die Multimedia-Nachricht-Mehrfachelemente ein zusätzliches Multimedia-Nachricht-Element-Kopffeld mit einem geeignet Wert bekommen. Eine Unterscheidung ist beispielsweise für Werbung oder spezielle Nachrichtengruppen denkbar. Bevorzugt wird die Information des Informationsfeldes der Multimedia-Nachricht in dem Netzwerkelement, bevorzugt dem MMS RS, hinzugefügt.

In einer Weiterbildung der vorliegenden Erfindung weist die Multimedia-Nachricht ein drittes Informationsfeld auf, welches die Information enthält, ob die Multimedia-Nachricht dem Nutzer der Mobilstation präsentiert werden soll. Für den Fall, dass eine separate Multimedia-Nachricht nur zum Übermitteln von Multimedia-Nachricht-Mehrfachelementen vom MMS RS zum MMS UA gesendet wird, sollte vermieden werden, dass diese Multimedia-Nachricht durch den MMS UA dem Anwender präsentiert wird. Dies kann durch ein zusätzliches Multimedia-Nachricht-Kopffeld erreicht werden, welches bevorzugt vom MMS RS eingefügt wird und den MMS UA veranlasst, diese Multimedia-Nachricht nicht dem Anwender zu präsentieren. Nachdem ein Multimedia-Nachricht-Mehrfachelement zum MMS UA übermittelt wurde, erfolgt eine Speicherung, z.B. auf einer Smart Card ((U)SIM oder Multimedia Card) oder in der Mobilstation.

In einer weiteren Ausführungsform der vorliegenden Erfindung wird eine Speicherung eines Multimedia-Nachricht-Mehrfachelements in der Mobilstation von einem Nutzer-Mittel vorgenommen. Bevorzugt handelt es sich bei dem Nutzer-Mittel um eine MMS UA. Dieses Nutzer-Mittel nimmt die Speicherung eigenhändig vor. Dadurch, dass ein Multimedia-Nachricht-Mehrfachelement ein neues Multimedia-Nachricht-Element-Kopffeld enthält, weiß das Nutzer-Mittel, dass es dieses Multimedia-Nachricht-Mehrfachelement unter einer entsprechenden Referenz auf einem verfügbaren Speichermedium speichern soll.

In einer anderen Ausführungsform wird eine Speicherung eines Multimedia-Nachricht-Mehrfachelements in der Mobilstation von einem Anwendungs-Mittel organisiert und/oder durchgeführt. Bei dem Anwendungs-Mittel handelt es sich bevorzugt um ein USAT. In dieser Ausführungsform weiß das Anwendungs-Mittel nichts von den Multimedia-Nachricht-Mehrfachelementen, sondern die Anwendungs-Mittel organisieren die Speicherung, wobei der Speicher selbst weiterhin von dem Anwendungs-Mittel initiiert wird. Denkbar sind dabei zwei Möglichkeiten.

Die erste Möglichkeit ist, das USAT den MMS UA einmalig dazu auffordert, Kopien aller Kopffelder (sogenannte "Header"), d.h. sowohl den Multimedia-Nachricht-Header als auch alle Multimedia-Nachricht-Element-Header zu allen ankommenden Multimedia-Nachrichten an ihn, also an USAT weiterzugeben. USAT wertet daraufhin die Multimedia-Nachncht-Element-Header aus, ermittelt dabei alle vorhandenen Multimedia-Nachricht-Mehrfachelemente anhand des neuen Multimedia-Nachricht-Element-Headerfeldes und fordert dann den MMS UA dazu auf, die entsprechenden Multimedia-Nachricht-Mehrfachelemente unter der entsprechenden Referenz auf einem verfügbaren Speichermedium zu speichern.

Eine zweite Möglichkeit ist, dass der MMS UA nur dann Kopien aller Header, d.h. sowohl den Multimedia-Nachricht-Header als auch alle Multimedia-Nachricht-Element-Header, an USAT weitergibt, wenn im Multimedia-Nachricht-Header ein entsprechendes Headerfeld, das der MMS RS einfügt, angegeben ist. Das Auswerten der Header durch USAT und die Aufforderung an den MMS UA zum Speichern erfolgt entsprechend der ersten Möglichkeit.

Des Weiteren ist es denkbar, dass USAT nicht nur die Organisation, sondern auch die eigentliche Speicherung übernimmt. Auch dann sind beide zuvor erläuterten Möglichkeiten anwendbar, mit dem Unterschied, dass nicht nur Kopien aller Header, sondern die gesamte - Multimedia-Nachricht an USAT weitergegeben wird. USAT wertet dabei nicht nur die Header aus, sondern speichert zusätzlich noch die Multimedia-Nachricht-Mehrfachelemente auf der UICC (bzw. auf der Smart Card, die auf der USAT liegt) mit der entsprechenden Referenz.

Bei den drei vorstehend erläuterten Möglichkeiten kann folgende Überschreibungsregel angewendet werden: Wenn ein Multimedia-Nachricht-Mehrfachelement mit einer Referenz, die schon existiert, gespeichert werden soll, so soll das alte Multimedia-Nachricht-Mehrfachelement überschrieben werden. Mit dieser Regel können beispielsweise auch Multimedia-Nachricht-Mehrfachelemente aktualisiert werden.

Zum Vermeiden eines Sendens und Speicherns von Multimedia-Nachricht-Mehrfachelementen ist jedoch auch denkbar, zum Zeitpunkt der Produktauslieferung der Mobilstation, des MMS UA, der UICC oder eines anderen Speichermediums auf das vom MMS UA zugegriffen werden kann, schon Multimedia-Nachricht-Mehrfachelemente mit entsprechender Referenzierung darauf zu speichern.

In einer Weiterbildung der vorliegenden Erfindung wird in eine an eine Mobilstation zu sendende Multimedia-Nachricht eine Referenz auf ein Multimedia-Nachricht-Mehrfachelement eingefügt, falls das Multimedia-Nachricht-Mehrfachelement bereits in der Mobilstation gespeichert ist. Wenn beispielsweise vom MMS RS zum MMS UA eine Multimedia-Nachricht gesendet wird, die ein bestimmtes Multimedia-Nachricht-Mehrfachelement (das in der dazugehörigen Mobilstation mit entsprechender Referenz gespeichert ist) enthalten soll, dann wird im MMS RS nicht dieses Multimedia-Nachricht-Mehrfachelement eingefügt, sondern ein zusätzliches Multimedia-Nachricht-Kopffeld mit der entsprechenden Referenz darauf. Sodann wird diese Multimedia-Nachricht vom MMS RS zur Mobilstation übermittelt.

Bevorzugt wird das Einfügen eines Multimedia-Nachricht-Mehrfachelements in der Mobilstation von einem Nutzer-Mittel vorgenommen. Bei dem Nutzer-Mittel handelt es sich bevorzugt um ein MMS UA. Dadurch, dass die Multimedia-Nachricht ein neues Multimedia-Nachricht-Kopffeld enthält, weiß der MMS UA, dass er das entsprechende Multimedia-Nachricht-Mehrfachelement unter der entsprechenden Referenz aus dem entsprechenden Speichermedium auslesen kann, um es dann in die Multimedia-Nachricht einzufügen.

In einer weiteren Ausführungsform wird das Einfügen eines Multimedia-Nachricht-Mehrfachelements in der Mobilstation von einem Anwendungs-Mittel organisiert und/oder durchgeführt. Bei dem Anwendungs-Mittel handelt es sich bevorzugt um ein USAT. Dabei organisiert nicht das Nutzer-Mittel (MMS UA) sondern das Anwendungs-Mittel (USAT) das Einfügen eines Multimedia-Nachricht-Mehrfachelements in eine Multimedia-Nachricht. Das Einfügen selbst führt weiterhin das Nutzer-Mittel aus. Dazu sind zwei Möglichkeiten denkbar: Bei der ersten Möglichkeit fordert das Anwendungs-Mittel das Nutzer-Mittel einmalig dazu auf, Kopien aller Header zu allen ankommenden Multimedia-Nachrichten an ihn - also an das Anwendungs-Mittel - zu schicken. Das Anwendungs-Mittel wertet daraufhin das Multimedia-Nachricht-Kopffeld aus und entdeckt dabei ein entsprechendes Multimedia-Nachricht-Kopffeld. Es können auch mehrere Multimedia-Nachricht-Kopffelder dieser Art vorhanden sein. Daraufhin fordert das Anwendungs-Mittel das Nutzer-Mittel dazu auf, die entsprechende referenzierbaren Multimedia-Nachricht-Mehrfachelemente in die Multimedia-Nachricht einzufügen.

Bei der zweiten Möglichkeit ist es so, dass das Nutzer-Mittel nur dann Kopien aller Kopffelder an das Anwendungs-Mittel schickt, wenn im Multimedia-Nachricht-Kopffeld ein entsprechendes Kopffeld angegeben ist. Das Auswerten der Kopffelder durch das Anwendungs-Mittel und die Aufforderung an das Nutzer-Mittel zum Einfügen der entsprechenden Multimedia-Nachricht-Mehrfachelemente erfolgt entsprechend der vorangegangenen erläuterten Möglichkeit.

Das Anwendungs-Mittel (USAT) kann nicht nur die Organisation, sondern auch das eigentliche Einfügen eines Multimedia-Nachricht-Mehrfachelements übernehmen. Auch dann sind die beiden zuvor erläuterten Möglichkeiten anwendbar, mit dem Unterschied, dass nicht nur Kopien aller Kopffelder, sondern die gesamte Multimedia-Nachricht an das Anwendungs-Mittel weitergegeben wird. Das Anwendungs-Mittel würde somit nicht nur die Kopffelder auswerten, sondern zusätzlich noch entsprechend den Referenzen Multimedia-Nachricht-Mehrfachelemente von der UICC (bzw. auf der Smart Card, auf der USAT liegt) laden, diese in die Multimedia-Nachricht einfügen und die modifizierte Multimedia-Nachricht dann an das Nutzer-Mittel zurückgeben.

Falls eine auf eine Programmiersprache basierende Präsentation, beispielsweise eine SMIL-Präsentation, im Hauptteil der zu übertragenden Multimedia-Nachricht enthalten ist, könnte ein Netzwerkelement (z.B. MMS RS) alternativ zur Einführung eines zusätzlichen Multimedia-Nachricht-Kopffeldes die Referenz auf das im Endgerät abgespeicherte Multimedia-Nachricht-Mehrfachelement auch direkt in die SMIL-Präsentation einbinden. Bei SMIL (Synchronize Multimedia Integration Language) handelt es sich um eine Programmiersprache zur Beschreibung von interaktiven, audiovisuellen Präsentationen. In einem solchen Fall würde das Multimedia-Nachricht-Mehrfachelement beim Öffnen bzw. Betrachten der Multimedia-Nachricht aus der SMIL-Präsentation heraus aufgerufen werden. Dabei wird das zusätzliche Multimedia-Nachricht-Kopffeld nicht eingefügt und somit wird auch das Multimedia-Nachricht-Mehrfachelement in der Mobilstation nicht physikalisch in die Multimedia-Nachricht eingefügt. Statt dessen wird die Referenz in die SMIL-Präsentation eingebunden. Ein Vorteil dabei ist, dass beim Präsentieren einer Multimedia-Nachricht, das aktuelle Multimedia-Nachricht-Mehrfachelement gezeigt wird (z.B. wenn zwischen dem Empfang und dem Präsentieren der Multimedia-Nachricht ein Multimedia-Nachricht-Mehrfachelement, wie beispielsweise eine Werbenachricht durch Überschreiben aktualisiert wird).

Es ist auch denkbar, dass eine Referenz auf ein in der Mobilstation abgespeicherte Multimedia-Nachricht-Mehrfachelement direkt in eine Multimedia-Nachricht eingebunden werden.

Des weiteren ist es möglich, dass alle zusätzlichen Funktionalitäten des Netzwerkelements (MMS RS) von einem Server übernommen werden, der von einem sogenannten MMS VASP (MMS Value Added Service Provider) betrieben wird. In einem solchen Fall wird die Multimedia-Nachricht zunächst von dem Netzwerkelement (MMS RS) zum MMS VASP gesendet, der die notwendigen Funktionalitäten auf die Multimedia-Nachricht anwendet. Danach sendet der MMS VASP die eventuell durch Hinzufügen von Kopffeldern modifizierte Multimedia-Nachricht zum Netzwerkelement zurück. Das Netzwerkelement (MMS RS) übermittelt dann die Multimedia-Nachricht an das Nutzer-Mittel (MMS UA).

Folgende Regel könnte des weiteren vorteilhaft angewendet werden: Wenn ein Multimedia-Nachricht-Mehrfachelement nicht mit seiner Referenz im Speicher vorliegt, so wird kein Einfügen vorgenommen. Zusätzlich ist denkbar, dass das Nutzermittel (z.B. MMS UA) eine Fehlermeldung an das Netzwerkelement (z.B. MMS RS) sendet, welche auf das Fehlen des referenzierten Multimedia-Nachricht-Mehrfachelements hinweist. Eine Möglichkeit wäre dann, dass das Netzwerkelement aufgrund der Fehlermeldung entweder nicht mehr auf dieses Multimedia-Nachricht-Mehrfachelement referenziert, oder dass das Netzwerkelement eine Übermittlung des fehlenden Multimedia-Nachricht-Mehrfachelements durchführt, um bei weiteren Multimedia-Nachrichten diese Fehler zu vermeiden.

Die Auswahl vom Netzwerkelement, ob und auf welche Multimedia-Nachricht-Mehrfachelement es mit dem zusätzlichen Multimedia-Nachricht-Kopffeld referenziert bzw. welches Multimedia-Nachricht-Mehrfachelement in eine Multimedia-Nachricht eingefügt werden soll, kann von bestimmten Bedingungen abhängig gemacht werden.

Dieses Vorgehen ist bevorzugt dann anwendbar, wenn es sich bei den Multimedia-Nachricht-Mehrfachelementen um Werbenachrichten handelt, da in einem solchen Fall gezielt Werbungen gesendet werden sollen. Die Auswahl kann beispielsweise von der Sende-Adresse abhängig gemacht werden. Ist beispielsweise der Absender ein bestimmter Netzwerkanbieter, so soll auch eine Werbenachricht dieses Netzwerkanbieters eingefügt werden. Die Auswahl kann aber auch von dem Aufenthaltsort des Empfängers abhängig gemacht werden. Befindet sich der Empfänger beispielsweise in der Nähe eines bestimmten Supermarkts, dann soll auch eine Werbenachricht dieses bestimmten Supermarkts eingefügt werden.

Die vorliegende Erfindung betrifft des Weiteren eine Mobilstation zur Verwendung bei einem erfindungsgemäßen Verfahren und eine Mobilstation zur Verwendung in einem erfindungsgemäßen System.

Ein Vorteil der vorliegenden Erfindung ist, dass Multimedia-Nachricht-Mehrfachelemente, die mehrmals vom Netzwerkelement (z.B. MMS RS) zum gleichen Nutzer-Mittel (z.B. MMS UA) übermittelt werden müssen, nur einmal über die Luftschnittstelle gesendet werden müssen. Dadurch wird erreicht, dass wiederholter Transport derselben Daten, d.h. derselben Multimedia-Nachricht-Mehrfachelemente, vermieden wird und somit wertvolle Ressourcen auf der Luftschnittstelle eingespart werden. Dies bewirkt besonders bei aufwändigen, multimedial gestalteten Multimedia-Nachricht-Mehrfachelementen eine deutliche Reduktion der zu übertragenden Daten für eine Multimedia-Nachricht.

Bei der vorliegenden Erfindung hat der Netzwerkbetreiber die Möglichkeit, ein bestimmtes Multimedia-Nachricht-Mehrfachelement als Werbenachricht in mehrere Multimedia-Nachrichten einzufügen, bevor diese Multimedia-Nachricht dem Anwender der Mobilstation präsentiert wird. Dabei wird vermieden, die Luftschnittstelle immer wieder mit der gleichen Werbebotschaft zu belasten.

Die Erfindung wird im Folgenden unter Hinweis auf die beigefügten Zeichnungen anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: eine MMS-Netzwerk-Architektur nach 3GPP;
- Figur 2: ein Ausführungsbeispiel einer Übertragung einer Multimedia-Nachricht;
- Figur 3: ein Ausführungsbeispiel einer Übertragung einer Multimedia-Nachricht mit einem Multimedia-Nachricht-Element-Kopffeld;
- Figur 4: ein Ausführungsbeispiel einer Übertragung einer Multimedia-Nachricht mit einem zusätzlichen Multimedia-Nachricht-Kopffeld;
- Figur 5: ein Ausführungsbeispiel einer Übertragung einer Multimedia-Nachricht mit einem zusätzlichen Multimedia-Nachricht-Mehrfachelement;
- Figur 6: ein Ausführungsbeispiel einer Übertragung einer Multimedia-Nachricht mit einem zusätzlichen Multimedia-Nachricht-Kopffeld;
- Figur 7: ein Ausführungsbeispiel einer Übertragung einer Multimedia-Nachricht mit einem Einfügen eines zusätzlichen Multimedia-Nachricht-Mehrfachelements;
- Figur 8: ein Ausführungsbeispiel einer Übertragung einer Multimedia-Nachricht mit einem Einfügen eines zusätzlichen Multimedia-Nachricht-Kopffeldes; und
- Figur 9: ein Ausführungsbeispiel zum Einfügen eines Multimedia-Nachricht-Mehrfachelements in eine Multimedia-Nachricht.

Figur 1 wurde bereits in der Einleitung der Beschreibung erläutert, so dass an dieser Stelle darauf verwiesen wird.

In einem ersten Ausführungsbeispiel lässt sich das Einfügen von Multimedia-Nachricht-Mehrfachelementen in Multimedia-Nachrichten in vier Schritte aufgliedern:

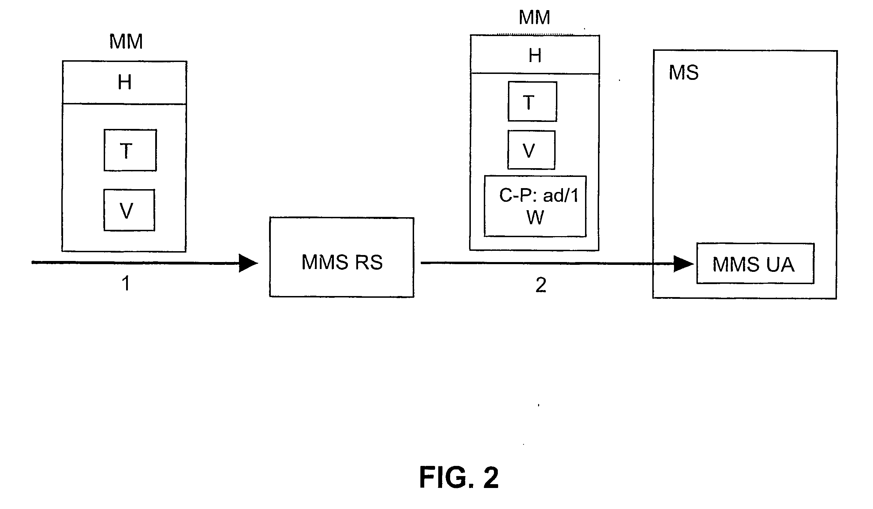

In einem ersten Schritt soll eine Multimedia-Nachricht zu einem Anwender geschickt werden. Dazu gelangt diese Multimedia-Nachricht zunächst zu dem dafür zuständigen MMS RS. Bevor der MMS RS diese Multimedia-Nachricht an den MMS UA dieses Anwenders weiterleitet, fügt er eine Werbenachricht als Multimedia-Nachricht-Mehrfachelement in diese Multimedia-Nachricht ein. Dabei erhält das Multimedia-Nachricht-Element-Kopffeld beispielsweise den Eintrag "C-P: ad/1". Anschließend übermittelt der MMS RS diese Multimedia-Nachricht mittels einer Nachricht "MM1_retrieve.RES" 2 an den MMS UA. Dieser Vorgang ist in Figur 2 gezeigt.

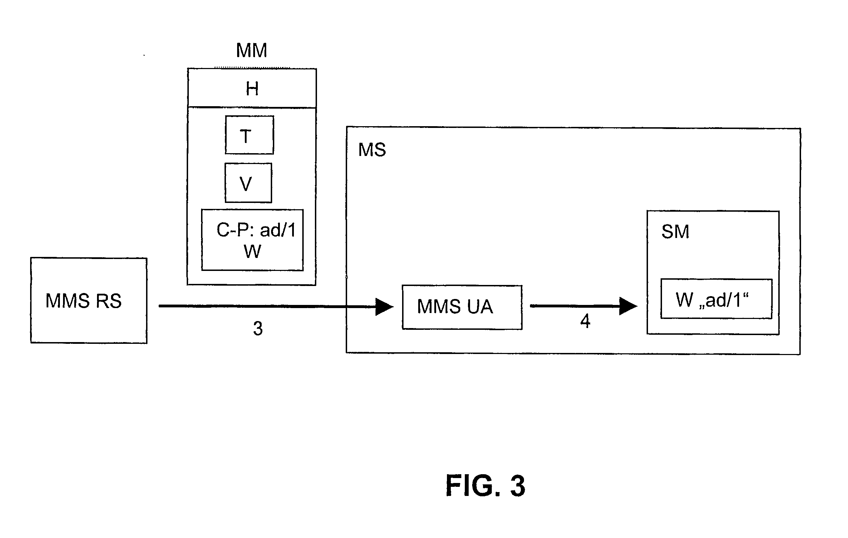

In einem zweiten Schritt wertet der MMS UA, nachdem er die Multimedia-Nachricht erhalten hat, alle Multimedia-Nachricht-Element-Kopffelder aus und entdeckt dabei das Multimedia-Nachricht-Element-Kopffeld "C-P: ad/1", das zu dem Multimedia-Nachricht-Mehrfachelement mit der Werbebotschaft gehört. Daraufhin speichert der MMS UA dieses Multimedia-Nachricht-Mehrfachelement unter der entsprechenden Referenz (hier z.B. "ad/1") auf einem verfügbaren Speichermedium. Der Vorgang des zweiten Schrittes ist beispielsweise in Figur 3 gezeigt. Danach kann der MMS UA mit der Multimedia-Nachricht weiter verfahren.

In einem dritten Schritt möchte der MMS RS nochmals das erste Multimedia-Nachricht-Mehrfachelement mit der Referenz "ad/1" in eine Multimedia-Nachricht einfügen. Anstatt jedoch erneut (wie unter Schritt eins) das Multimedia-Nachricht-Mehrfachelement einzufügen, fügt der MMS RS nun ein zusätzliches Multimedia-Nachricht-Kopffeld "X-MMS-Insert-MM_Element: ad/1" ein und schickt diese Multimedia-Nachricht dann weiter an den MMS UA.

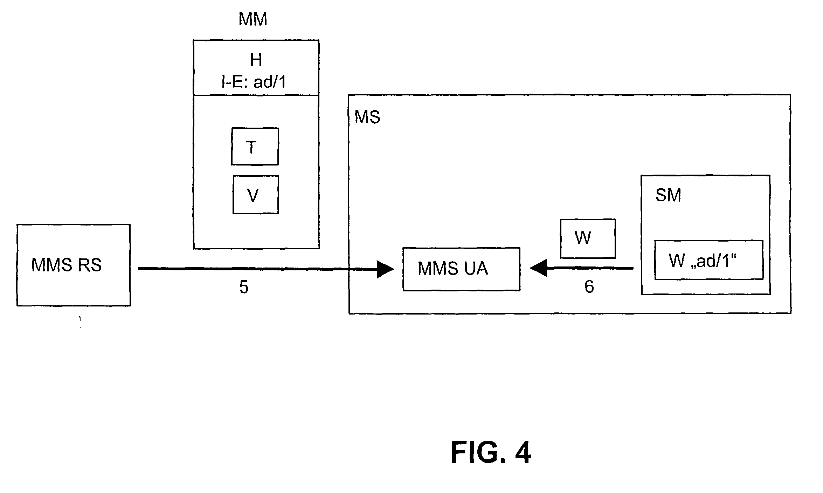

In einem vierten Schritt wertet der MMS UA, nachdem er die Multimedia-Nachricht erhalten hat, alle Multimedia-Nachricht-Element-Kopffelder aus, wobei das Multimedia-Nachricht-Kopffeld "X-MMS-Insert-MM_Element: ad/1" entdeckt wird. Daraufhin liest der MMS UA dieses Multimedia-Nachricht-Mehrfachelement unter der entsprechenden Referenz (hier z.B. "ad/1") vom Speichermedium und fügt dieses Multimedia-Nachricht-Mehrfachelement in die Multimedia-Nachricht ein. Der Vorgang des vierten Schrittes ist in Figur 4 gezeigt. Anschließend kann der MMS UA mit der Multimedia-Nachricht weiterverfahren.

In einem zweiten Ausführungsbeispiel der vorliegenden Erfindung fordert USAT den MMS UA einmalig dazu auf, Kopien aller Kopffelder (sowohl des Multimedia-Nachricht-Kopffeld als auch aller Multimedia-Nachtricht-Element-Kopffelder) aller ankommender Multimedia-Nachrichten an ihn - also an USAT - weiterzugeben.

Der erste Schritt ist identisch zum ersten Schritt des ersten Ausführungsbeispiels.

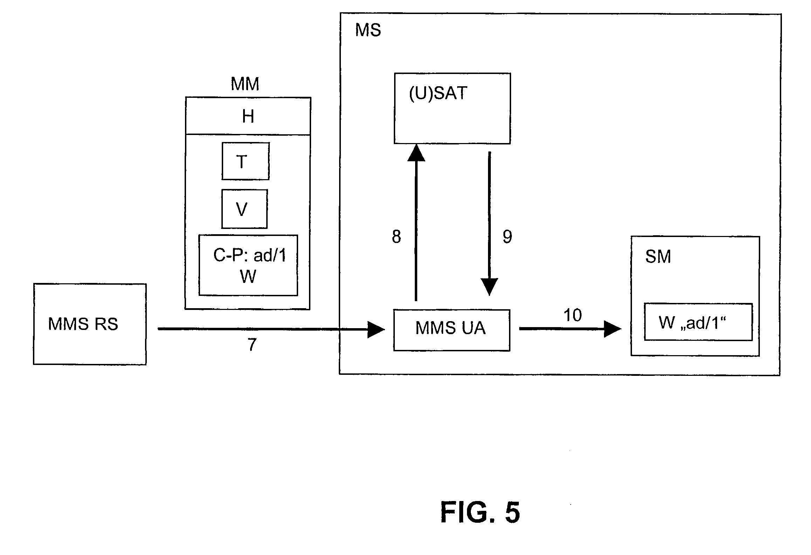

Beim zweiten Schritt gibt der MMS UA, nachdem er die Multimedia-Nachricht erhalten hat, Kopien aller Kopffelder an USAT weiter (weil er zuvor von USAT dazu aufgefordert wurde, siehe Einleitung des zweiten Ausführungsbeispiels). USAT wertet die Multimedia-Nachricht-Element-Kopffelder aus, ermittelt dabei alle vorhandenen Multimedia-Nachricht-Mehrfachelemente anhand des neuen Multimedia-Nachricht-Element-Kopffeldes (z.B. "C-P:ad/1") und fordert dann den MMS UA dazu auf, die entsprechenden MM-Mehrfachelemente unter der entsprechenden Referenz (hier z.B. "ad/1") auf einem verfügbaren Speichermedium zu speichern. Der Vorgang des zweiten Schrittes ist in Figur 5 dargestellt. Danach kann der MMS UA mit der Multimedia-Nachricht weiterverfahren.

Als dritter Schritt folgt ein zum ersten Ausführungsbeispiel identischer Verfahrensschritt drei.

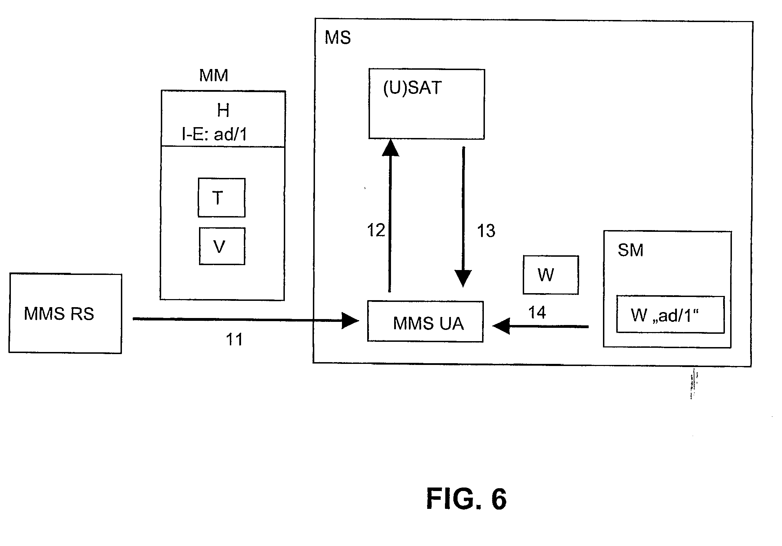

In dem vierten Schritt gibt der MMS UA Kopien aller Kopffelder an USAT weiter. USAT wertet daraufhin das Multimedia-Nachricht-Kopffeld aus und entdeckt dabei das Multimedia-Nachricht-Kopffeld "X-MMS-Insert-MM_Element: ad/1". Daraufhin fordert USAT den MMS UA dazu auf, das entsprechend referenzierte Multimedia-Nachricht-Mehrfachelement "ad/1" in die Multimedia-Nachricht einzufügen. Daher liest der MMS UA dieses Multimedia-Nachricht-Mehrfachelement unter der entsprechenden Referenz "ad/1" vom Speichermedium und fügt dieses Multimedia-Nachricht-Mehrfachelement in die Multimedia-Nachricht ein. Dieser Vorgang ist in Figur 6 dargestellt. Danach kann der MMS UA mit der Multimedia-Nachricht weiterverfahren.

In einem dritten Ausführungsbeispiel der vorliegenden Erfindung fordert USAT den MMS UA einmalig dazu auf, Kopien aller Kopffelder (sowohl des Multimedia-Nachricht-Kopffeld als auch aller Multimedia-Nachtricht-Element-Kopffelder) aller ankommender Multimedia-Nachrichten an ihn - also an USAT - weiterzugeben, wenn im Multimedia-Nachricht-Kopffeld ein entsprechendes Kopffeld (z.B. "X-MMS-Intended_for_USAT: YES") angegeben ist.

In einem ersten Schritt soll eine Multimedia-Nachricht zu einem Anwender geschickt werden. Dazu gelangt diese Multimedia-Nachricht zunächst zu dem dafür zuständigen MMS RS. Bevor der MMS RS diese Multimedia-Nachricht an den MMS UA dieses Anwenders weiterleitet, fügt er eine Werbenachricht als Multimedia-Nachricht-Mehrfachelement in diese Multimedia-Nachricht ein. Dabei erhält das Multimedia-Nachricht-Element-Kopffeld beispielsweise den Eintrag "C-P: ad/1" und das Multimedia-Nachricht-Kopffeld beispielsweise den Eintrag "X-MMS-Intended_for_USAT: YES". Anschließend übermittelt der MMS RS diese Multimedia-Nachricht mittels einer Nachricht "MM1_retrieve.RES" 2 an den MMS UA.

Beim zweiten Schritt gibt der MMS UA Kopien aller Kopffelder an USAT weiter, da die Bedingung erfüllt ist, dass das Kopffeld "X-MMS-Intended_for_USAT: YES" in die Multimedia-Nachricht eingefügt ist. Somit entspricht dieser zweite Schritt dem zweiten Schritt aus dem zweiten Ausführungsbeispiel.

In einem dritten Schritt möchte der MMS RS nochmals das erste Multimedia-Nachricht-Mehrfachelement mit der Referenz "ad/1" in eine Multimedia-Nachricht einfügen. Anstatt jedoch erneut (wie unter Schritt eins) das Multimedia-Nachricht-Mehrfachelement einzufügen, fügt der MMS RS nun ein zusätzliches Multimedia-Nachricht-Kopffeld "X-MMS-Insert-MM_Element: ad/1" und das zusätzliche Multimedia-Nachricht-Kopffeld "X-MMS-Intended_for_USAT: YES" ein und schickt diese Multimedia-Nachricht dann weiter an den MMS UA.

Beim vierten Schritt gibt der MMS UA Kopien aller Kopffelder an USAT weiter, da die Bedingung erfüllt ist, dass das Kopffeld "X-MMS-Intended_for_USAT: YES" in die Multimedia-Nachricht eingefügt ist. Somit entspricht dieser vierte Schritt dem vierten Schritt aus dem vorherigen Ausführungsbeispiel.

Ein viertes Ausführungsbeispiel ist eine Variante zum zweiten bzw. dritten Ausführungsbeispiel.

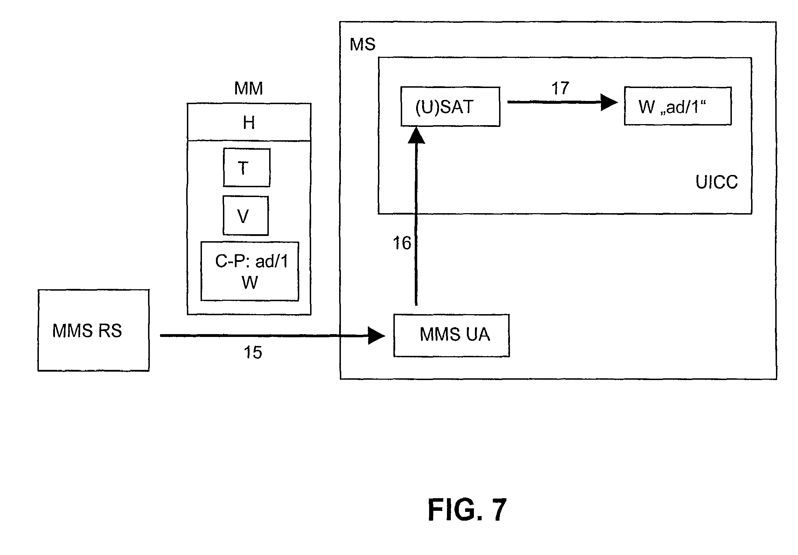

Der zweite Schritt ändert sich gegenüber den Ausführungsbeispielen zwei und drei in der Art, dass der MMS UA nicht nur Kopien aller Kopffelder, sondern eine Kopie der kompletten Multimedia-Nachricht an USAT weitergibt (bei der Variante zu Ausführungsbeispiel zwei auf Grund der vorherigen einmaligen Aufforderung durch USAT, bei der Variante zu Ausführungsbeispiel drei auf Grund des Kopffeldes "X-MMS-Intended_for_USAT: YES"). USAT wertet die Multimedia-Nachricht-Element-Kopffelder aus, ermittelt dabei alle vorhandenen Multimedia-Nachricht-Mehrfachelemente anhand des neuen Multimedia-Nachricht-Element-Kopffeldes (z.B. "C-P:ad/1") und speichert dann die entsprechenden MM-Mehrfachelemente unter der entsprechenden Referenz (hier z.B. "ad/1") auf einem verfügbaren Speichermedium, z.B. UICC (bzw. die Smart Card, auf der USAT liegt), ab. Der Vorgang des zweiten Schrittes ist in Figur 7 dargestellt. Danach kann der MMS UA mit der Multimedia-Nachricht weiterverfahren.

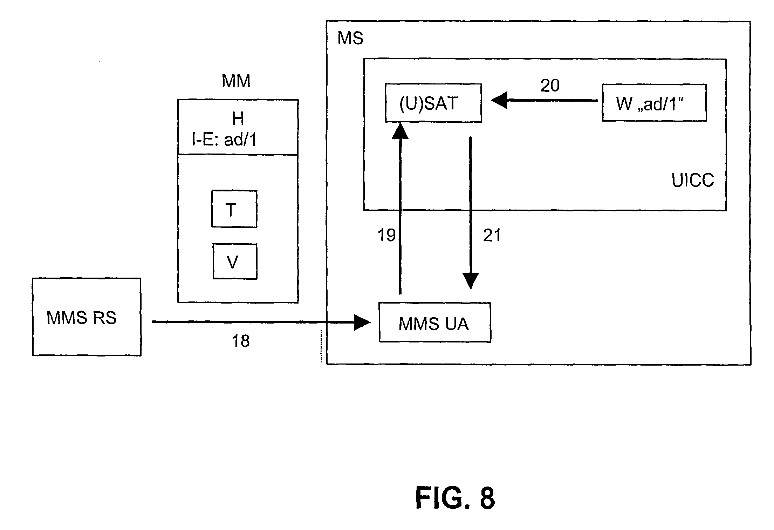

Der vierte Schritt ändert sich gegenüber den Ausführungsbeispielen zwei und drei in der Art, dass der MMS UA nicht nur Kopien aller Kopffelder, sondern die gesamte Multimedia-Nachricht an USAT weitergibt (bei der Variante zu Ausführungsbeispiel zwei auf Grund der vorherigen einmaligen Aufforderung durch USAT, bei der Variante zu Ausführungsbeispiel drei auf Grund des Kopffeldes "X-MMS-Intended_for_USAT: YES"). USAT wertet daraufhin das Multimedia-Nachricht-Kopffeld aus und entdeckt dabei das Multimedia-Nachricht-Kopffeld "X-MMS-Insert-MM_Element: ad/1". Daher liest USAT dieses Multimedia-Nachricht-Mehrfachelement unter der entsprechenden Referenz "ad/1" vom Speichermedium und fügt dieses Multimedia-Nachricht-Mehrfachelement in die Multimedia-Nachricht ein. Danach gibt USAT die so modifizierte Multimedia-Nachricht an den MMS UA zurück. Dieser Vorgang ist in Figur 8 dargestellt. Danach kann der MMS UA mit der Multimedia-Nachricht weiterverfahren.

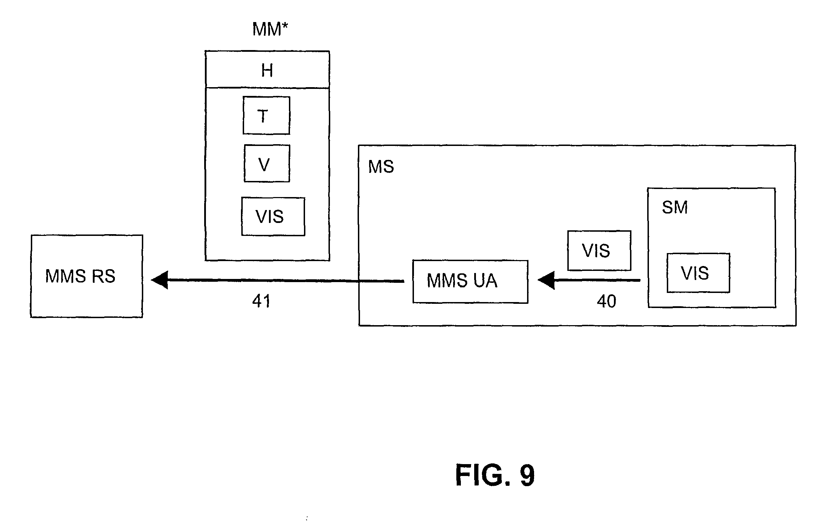

In einem fünften Ausführungsbeispiel wird nun der Fall betrachtet, dass nicht der MMS RS dem MMS UA eine Multimedia-Nachricht schickt, sondern dass umgekehrt der MMS UA eine Multimedia-Nachricht an den MMS RS schickt. Dabei ist denkbar, dass der MMS UA bzw. USAT ein Multimedia-Nachricht-Mehrfachelement in eine Multimedia-Nachricht einfügt, bevor die Multimedia-Nachricht an den MMS RS weitergeleitet wird. Der Anwender kann dann z.B. in eine bestimmte oder in alle Multimedia-Nachrichten, die er verschickt, eine Datei mit seiner Visitenkarte einfügen. Dies wird in Figur 9 gezeigt.
Liste 1:
   X-Mms-Message-Type: m-send-req
   ...
      X-Mms-Delivery-Report: Yes
      From: markus.trauberg@sal.siemens.de
      To: andreas.schmidt@sal.siemens.de
      Date: Fri, 7 Jul 2000 20:59:30 +0100
      Subject: A multimedia message
   nEntries=2
      HeaderLen=13
      DataLen=31
      Content-Type: text/plain;
      name="datei.txt"
      "Hallo Andreas, wie geht es Dir?"
      HeaderLen=11
      DataLen=2736
      Content-Type: video;
      name"film.vid"
      *"...Video-Data..."*
Liste 2:
   X-Mms-Message-Type: m-send-re q
      X-Mms-Delivery-Report: Yes
      From: markus.trauberg@sal.siemens.de
      To: andreas.schmidt@sal.siemens.de
      Date: Fri, 7 Jul 2000 20:59:30 +0100
      Subject: A multimedia message
   nEntries=3
      HeaderLen=13
      DataLen=31
      Content-Type: text/plain;
      name="datei.txt"
      "Hallo Andreas, wie geht es Dir?"
      HeaderLen=11
      DataLen=2736
      Content-Type: video;
      name=" film. vid"
      *"...Video-Data..."*
      **HeaderLen=13**
      **DataLen=56**
      **Content-Type: text/plain;**
      **C-P: ad/1;**
      **name="siemens.txt"**
      **"Diese MM wird gesponsort von: Siemens mobile - be inspired"**

      Die Liste 1 zeigt eine Multimedia-Nachricht nach dem Stand der Technik. Der obere Teil ist ein sogenannter Multimedia-Nachricht-Header. "nEntris" gibt an, wie viele Multimedia-Nachricht-Elemente in die Multimedia-Nachricht eingefügt sind. Danach folgen die Multimedia-Nachricht-Elemente jeweils mit einem eigenen Multimedia-Nachricht-Element-Kopffeld und Inhalt. Sowohl der MMS RS als auch der MMS UA haben nach Stand der Technik die Funktionalität, ein Multimedia-Nachricht-Element in eine vorhandene Multimedia-Nachricht einzufügen und/oder den Multimedia-Nachricht-Header und/oder einen Multimedia-Nachricht-Element-Header zu erweitern und/oder zu ändern. Eine beispielhafte Änderung gegenüber der Liste 1 ist in der Liste 2 durch Fettdruck dargestellt. Das eingefügte Multimedia-Nachricht-Element hat hier beispielhaft das Dateiformat "Text", andere Dateiformate sind ebenfalls denkbar.
Liste 3:
   X-Mms-Message-Type: m-send-req
   ...
      X-Mms-Delivery-Report: Yes
      From: markus.trauberg@sal.siemens.de
      To: andreas.schmidt@sal.siemens.de
      Date: Fri, 7 Jul 2000 20:59:30 +0100
      Subject: A multimedia message
   nEntries=3
      HeaderLen=13
      DataLen=31
      Content-Type: text/plain;
      name="datei.txt"
      "Hallo Andreas, wie geht es Dir?"
      HeaderLen=11
      DataLen=2736
      Content-Type: video;
      name="film.vid"
      *"...Video-Data..."*
      HeaderLen=13
      DataLen=56
      Content-Type: text/plain;
      **C-P: ad/1;**
      name="siemens.txt"
      "Diese MM wird gesponsort von: Siemens mobile - be inspired"
Liste 4:
   X-Mms-Message-Type: m-send-req
   ...
      X-Mms-Delivery-Report: Yes
      **X-MMS-Empfänger-Sichtbarkeit: Nein**
      To: andreas.schmidt@sal.siemens.de
      Date: Fri, 7 Jul 2000 20:59:30 +0100
      nEntries=1
      HeaderLen=13
      DataLen=58
      Content-Type: text/plain;
      **C-P: ad/2;**
      name="siemens2.txt"
      "Diese MM wird gesponsort von: Siemens Hausgeräte"
Liste 5:
   X-Mms-Message-Type: m-send-req
   ...
      X-Mms-Delivery-Report: Yes
      **X-MMS-Empfänger-Sichtbarkeit: Nein**
      To: andreas.schmidt@sal.siemens.de
      Date: Fri, 7 Jul 2000 20:59:30 +0100
   nEntries=2
      HeaderLen=13
      DataLen=56
      Content-Type: text/plain;
      **C-P: ad/1;**
      name="siemens.txt"
      "Diese MM wird gesponsort von: Siemens mobile - be inspired"
      HeaderLen=13
      DataLen=58
      Content-Type: text/plain;
      **C-P: ad/2;**
      name="siemens2.txt"
      "Diese MM wird gesponsort von: Siemens Hausgeräte"

      Die Listen 3, 4 und 5 zeigen drei beispielhafte Multimedia-Nachrichten, mit deren Hilfe Multimedia-Nachricht-Mehrfachelemente vom MMS RS zum MMS UA übermittelt werden können. Liste 3 zeigt eine erste Multimedia-Nachricht, welche das Multimedia-Nachricht-Mehrfachelement mit dem Namen "Siemens.txt" beinhalten soll. Diese bekommt das Multimedia-Nachricht-Mehrfachelement mit dem zusätzlichen Multimedia-Nachricht-Element-Headerfeld "C-P: ad/1" eingefügt. Liste 4 zeigt ein Beispiel, bei dem eine extra Multimedia-Nachricht verschickt wird, um dieses Multimedia-Nachricht-Mehrfachelement mit dem zusätzlichen Multimedia-Nachricht-Element-Headerfeld "C-P" zu übermitteln. Das zusätzliche Multimedia-Nachricht-Headerfeld "X-MMS-Empfänger-Sichtbarkeit: Nein" sorgt dafür, dass diese Multimedia-Nachricht später nicht vom MMS UA als "normale" Multimedia-Nachricht weiterverarbeitet wird. In dem Beispiel gemäß Liste 5 ist es auch möglich, mehrere Multimedia-Nachricht-Mehrfachelemente gleichzeitig mit Hilfe einer Multimedia-Nachricht zu übermitteln.
      Bei den Beispielen gemäß Listen 3, 4 und 5 weist das zusätzliche Multimedia-Nachricht-Element-Headerfeld "C-P: ad/1" darauf hin, dass es sich um ein Multimedia-Nachricht-Mehrfachelement handelt und gibt auch eine eindeutige Identifikationsnummer an, damit später eindeutig darauf referenziert werden kann.
Liste 6:
   X-Mms-Message-Type: m-send-req
   X-Mms-Transaction-ID: 543210
   X-Mms-Version: 1.0
   X-Mms-Message-Class: Personal
   X-Mms-Expiry: 36000
   X-Mms-Priority: Normal
   X-Mms-Sender-Visibility: Show
   X-Mms-Delivery-Report: Yes
   From: markus.trauberg@sal.siemens.de
   To: andreas.schmidt@sal.siemens.de
   Date: Fri, 7 Jul 2000 20:59:30 +0100
   Subject: A multimedia message
   nEntries=2
   HeaderLen=13
   DataLen=31
   Content-Type: text/plain;
   name="datei.txt"
   "Hallo Andreas, wie geht es Dir?"
   HeaderLen=11
   DataLen=2736
   Content-Type: video;
   name=" film. vid"
   *"...Video-Data..."*
Liste 7:
   X-Mms-Message-Type: m-send-req
   X-Mms-Transaction-ID: 543210
   X-Mms-Version: 1.0
   X-Mms-Message-Class: Personal
   X-Mms-Expiry: 36000
   X-Mms-Priority: Normal
   X-Mms-Sender-Visibility: Show
   X-Mms-Delivery-Report: Yes
   **X-MMS-insert-MM_Element: ad/1**
   From: markus.trauberg@sal.siemens.de
   To: andreas.schmidt@sal.siemens.de
   Date: Fri, 7 Jul 2000 20:59:30 +0100
   Subject: A multimedia message
   nEntries=2
   HeaderLen=13
   DataLen=31
   Content-Type: text/plain;
   name="datei.txt"
   "Hallo Andreas, wie geht es Dir?"
   HeaderLen=11
   DataLen=2736
   Content-Type: video;
   name"film.vid"
   *"...Video-Data..."*
Liste 8:
   X-Mms-Message-Type: m-send-req
   X-Mms-Transaction-ID: 543210
   X-Mms-Version: 1.0
   X-Mms-Message-Class: Personal
   X-Mms-Expiry: 36000
   X-Mms-Priority: Normal
   X-Mms-Sender-Visibility: Show
   X-Mms-Delivery-Report: Yes
   **X-MMS-insert-MM_Element: ad/1**
   From: markus.trauberg@sal.siemens.de
   To: andreas.schmidt@sal.siemens.de
   Date: Fri, 7 Jul 2000 20:59:30 +0100
   Subject: A multimedia message
   nEntries=3
   HeaderLen=13
   DataLen=31
   Content-Type: text/plain;
   name="datei.txt"
   "Hallo Andreas, wie geht es Dir?"
   HeaderLen=11
   DataLen=2736
   Content-Type: video;
   name="film.vid"
   *"...Video-Data..."*
   **HeaderLen=13**
   **DataLen=56**
   **Content-Type: text/plain;**
   **name="siemens.txt"**
   **"Diese MM wird gesponsort von: Siemens mobile - be inspired"**

Liste 6 zeigt wiederum eine bekannte Multimedia-Nachricht.

Liste 7 zeigt, wie anstatt erneut ein Multimedia-Nachricht-Mehrfachelement, das schon im Mobilfunkgerät gespeichert ist, in die Multimedia-Nachricht einzufügen, der MMS RS ein zusätzliches Multimedia-Nachricht-Headerfeld "X-MMS-Insert-MM_Element: ad/1" einfügt.

Aus Liste 8 ist ersichtlich, dass der MMS UA daraufhin weiß, dass er das mit "ad/1" referenzierte Multimedia-Nachricht-Mehrfachelement in die Multimedia-Nachricht einfügen muss, bevor er es weiterverarbeiten kann.

Nachfolgend werden die Figuren 2 bis 9 näher erläutert. In den nachfolgenden Ausführungen haben die selben Bezeichnungen jeweils die gleiche Bedeutung.

Figur 2 zeigt eine Multimedia-Nachricht MM mit einem Kopffeld (Header) H, den zwei MM-Elementen T (Text) und V (Videodatei). Der MMS RS erhält 1 die MM und fügt ein zusätzliches MM-Mehrfachelement W mit dem MM-Element-Kopffeld "C-P:ad/1" als Werbenachricht in die MM ein. Diese modifizierte MM wird an den MMS UA in der Mobilstation MS weitergeleitet 2.

Figur 3 zeigt, nachdem der MMS RS ein zusätzliches MM-Mehrfachelement W mit dem MM-Element-Kopffeld "C-P:ad/1" als Werbenachricht in die MM eingefügt hat, so wird die modifizierte MM an den MMS UA in der Mobilstation MS weitergeleitet 3. Das MM-Mehrfachelement mit der Werbenachricht W wird dann aufgrund des neuen MM-Element-Kopffeldes "C-P:ad/1" vom MMS UA in einem Speichermedium SM in der Mobilstation MS mit der Referenz "ad/1" gespeichert 4.

Figur 4 zeigt, nachdem der MMS RS ein zusätzliches MM-Kopffeld "I-E:ad/1" eingefügt hat, wird die modifizierte MM an den MMS UA in der Mobilstation MS weitergeleitet 5. Aufgrund dieses neuen MM-Kopffeldes liest der MMS UA sodann das MM-Mehrfachelement mit der Referenz "ad/1" aus dem Speichermedium SM aus 6 und fügt dieses dann in die MM ein.

Figur 5 zeigt, wie der MMS RS ein zusätzliches MM-Mehrfachelement W mit dem MM-Element-Kopffeld "C-P:ad/1" in die MM einfügt. Der MMS übergibt Kopien 8 aller Header an das (U)SAT, welches daraufhin das MM-Element-Kopffeld "C-P:ad/1" entdeckt. Darauf fordert (U)SAT den MMS UA auf 9, das entsprechende MM-Mehrfachelement auf ein verfügbares Speichermedium SM in der Mobilstation MS mit der Referenz "ad/1" abzuspeichern 10.

Figur 6 zeigt, wie der MMS RS ein zusätzliches MM-Kopffeld "I-E:ad/1" in die MM einfügt. Der MMS UA übergibt Kopien 12 aller Header an (U)SAT. Dieser entdeckt daraufhin das MM-Kopffeld "I-E:ad/1". Daher fordert (U)SAT den MMS UA auf 13, das entsprechende MM-Mehrfachelement "ad/1" vom Speichermedium SM zu lesen und das entsprechende MM-Mehrfachelement in die MM einzufügen 14.

Figur 7 zeigt ein Einfügen eines zusätzlichen MM-Mehrfachelements W mit dem MM-Element-Kopffeld "C-P:ad/1" in die MM durch den MMS RS. Der MMS UA übergibt 16 eine Kopie der kompletten MM an das (U)SAT. Das (U)SAT entdeckt daraufhin das MM-Element-Kopffeld "C-P:ad/1". Daher speichert USAT das entsprechende MM-Mehrfachelement auf der UICC mit der Referenz "ad/1" ab 17. Der MMS UA kann dann mit der MM weiterverfahren.

Figur 8 zeigt das Einfügen eines zusätzlichen MM-Kopffeldes "I-E:ad/1" durch den MMS RS. Der MMS UA übergibt 19 die komplette MM an USAT. Dieser entdeckt daraufhin das MM-Kopffeld "I-E:ad/1". Daher liest USAT das entsprechende MM-Mehrfachelement "ad/1" von der UICC (vgl. 20), fügt das entsprechende MM-Mehrfachelement in die MM ein und gibt die modifizierte MM an den MMS UA zurück 21. Der MMS UA kann dann mit der MM weiterverfahren.

Figur 9 zeigt schließlich, wie der MMS UA ein MM-Mehrfachelement VIS, z.B. eine Visitenkarte, in die MM einfügt 40. Danach übermittelt der MMS UA die modifizierte MM* mit Hilfe der Nachricht 41 an den MMS RS.

## Patentansprüche

1. Verfahren zum Einfügen mindestens eines Multimedia-Nachricht-Mehrfachelements in eine Multimedia-Nachricht, aufweisend die Verfahrensschritte
- Senden mindestens eines Multimedia-Nachricht-Mehrfachelements von einem Netzwerkelement (MMS RS) zu einer Mobilstation (MS),
- Senden einer ersten Multimedia-Nachricht von dem Netzwerkelement (MMS RS) zu der Mobilstation (MS), und
- Einfügen des Multimedia-Nachricht-Mehrfachelements in die erste Multimedia-Nachricht, wobei das Multimedia-Nachricht-Mehrfachelement nur einmal von dem Netzwerkelement (MMS RS) zu der Mobilstation (MS) gesendet wird und in der Mobilstation (MS) in eine Vielzahl von an die Mobilstation (MS) gesendeten Multimedia-Nachrichten eingefügt wird.

2. Verfahren gemäß Anspruch 1,
**dadurch gekennzeichnet, dass** das Einfügen in der Mobilstation (MS) erfolgt.

3. Verfahren gemäß einem der vorhergehenden Ansprüche,
**dadurch gekennzeichnet, dass** das Multimedia-Nachricht-Mehrfachelement in der ersten gesendeten Multimedia-Nachricht enthalten ist.

4. Verfahren gemäß einem der vorhergehenden Ansprüche,
**dadurch gekennzeichnet, dass** das Multimedia-Nachricht-Mehrfachelement in einer zweiten gesendeten Multimedia-Nachricht enthalten ist.

5. Verfahren gemäß einem der vorhergehenden Ansprüche,
**dadurch gekennzeichnet, dass** eine Vielzahl von Multimedia-Nachricht-Mehrfachelementen in einer Multimedia-Nachricht von dem Netzwerkelement (MMS RS) zu der Mobilstation (MS) gesendet werden.

6. Verfahren gemäß einem der vorhergehenden Ansprüche,
**dadurch gekennzeichnet, dass** eine Multimedia-Nachricht ein erstes Informationsfeld aufweist, welches die Unterscheidung verschiedener Multimedia-Nachricht-Mehrfachelemente ermöglicht.

7. Verfahren gemäß einem der vorhergehenden Ansprüche,
**dadurch gekennzeichnet, dass** eine Multimedia-Nachricht ein zweites Informationsfeld aufweist, durch welches ein Multimedia-Nachricht-Mehrfachelement einer Nachrichten-Gruppe zugeordnet werden kann.

8. Verfahren gemäß einem der Ansprüche 6 oder 7,
**dadurch gekennzeichnet, dass** die Information des Informationsfeldes der Multimedia-Nachricht in dem Netzwerkelement (MMS RS) hinzugefügt wird.

9. Verfahren gemäß einem der vorhergehenden Ansprüche,
**dadurch gekennzeichnet, dass** die Multimedia-Nachricht ein drittes Informationsfeld aufweist, welches die Information enthält, ob die Multimedia-Nachricht dem Nutzer der Mobilstation (MS) präsentiert werden soll.

10. Verfahren gemäß einem der vorhergehenden Ansprüche,
**dadurch gekennzeichnet, dass** eine Speicherung eines Multimedia-Nachricht-Mehrfachelements in der Mobilstation von einem Nutzer-Mittel (MMS UA) vorgenommen wird.

11. Verfahren gemäß einem der vorhergehenden Ansprüche,
**dadurch gekennzeichnet, dass** eine Speicherung eines Multimedia-Nachricht-Mehrfachelements in der Mobilstation von einem Anwendungs-Mittel (USAT) organisiert und/oder durchgeführt wird.

12. Verfahren gemäß einem der vorhergehenden Ansprüche,
**dadurch gekennzeichnet, dass** in eine an eine Mobilstation zu sendende Multimedia-Nachricht eine Referenz auf ein Multimedia-Nachricht-Mehrfachelement eingefügt wird, falls das Multimedia-Nachricht-Mehrfachelement bereits in der Mobilstation gespeichert ist.

13. Verfahren gemäß einem der vorhergehenden Ansprüche,
**dadurch gekennzeichnet, dass** das Einfügen eines Multimedia-Nachricht-Mehrfachelements in der Mobilstation von einem Nutzer-Mittel (MMS UA) vorgenommen wird.

14. Verfahren gemäß einem der vorhergehenden Ansprüche,
**dadurch gekennzeichnet, dass** die Einfügen eines Multimedia-Nachricht-Mehrfachelements in der Mobilstation von einem Anwendungs-Mittel (USAT) organisiert und/oder durchgeführt wird.

15. System zum Einfügen mindestens eines Multimedia-Nachricht-Mehrfachelements in eine Multimedia-Nachricht, aufweisend
- Mittel zum Senden mindestens eines Multimedia-Nachricht-Mehrfachelements von einem Netzwerkelement (MMS RS) zu einer Mobilstation (MS),
- Mittel zum Senden einer ersten Multimedia-Nachricht von dem Netzwerkelement (MMS RS) zu der Mobilstation (MS), und
- Mittel zum Einfügen des Multimedia-Nachricht-Mehrfachelements in die erste Multimedia-Nachricht, wobei das System geeignet ist, das Multimedia-Nachricht-Mehrfachelement nur einmal von dem Netzwerkelement (MMS RS) zu der Mobilstation (MS) zu senden und in der Mobilstation (MS) in eine Vielzahl von an die Mobilstation (MS) gesendeten Multimedia-Nachrichten einzufügen.

16. System gemäß Anspruch 15,
**dadurch gekennzeichnet, dass** die Mobilstation geeignet ist, dass in ihr das Einfügen erfolgt.

17. System gemäß einem der Ansprüche 15 oder 16,
**dadurch gekennzeichnet, dass** das Multimedia-Nachricht-Mehrfachelement in der ersten gesendeten Multimedia-Nachricht enthalten ist.

18. System gemäß einem der Ansprüche 15 bis 17,
**dadurch gekennzeichnet, dass** das Multimedia-Nachricht-Mehrfachelement in einer zweiten gesendeten Multimedia-Nachricht enthalten ist.

19. System gemäß einem der Ansprüche 15 bis 18,
**dadurch gekennzeichnet, dass** das System geeignet ist, eine Vielzahl von Multimedia-Nachricht-Mehrfachelementen in einer Multimedia-Nachricht von dem Netzwerkelement (MMS RS) zu der Mobilstation (MS) zu senden.

20. System gemäß einem der Ansprüche 15 bis 19,
**dadurch gekennzeichnet, dass** eine Multimedia-Nachricht ein erstes Informationsfeld aufweist, welches die Unterscheidung verschiedener Multimedia-Nachricht-Mehrfachelemente ermöglicht.

21. System gemäß einem der Ansprüche 15 bis 20,
**dadurch gekennzeichnet, dass** eine Multimedia-Nachricht ein zweites Informationsfeld aufweist, durch welches ein Multimedia-Nachricht-Mehrfachelement einer Nachrichten-Gruppe zugeordnet werden kann.

22. System gemäß einem der Ansprüche 20 oder 21,
**dadurch gekennzeichnet, dass** das System geeignet ist, die Information des Informationsfeldes der Multimedia-Nachricht in dem Netzwerkelement (MMS RS) hinzuzufügen.

23. System gemäß einem der Ansprüche 15 bis 22,
**dadurch gekennzeichnet, dass** die Multimedia-Nachricht ein drittes Informationsfeld aufweist, welches die Information enthält, ob die Multimedia-Nachricht dem Nutzer der Mobilstation (MS) präsentiert werden soll.

24. System gemäß einem der Ansprüche 15 bis 23,
**dadurch gekennzeichnet, dass** die Mobilstation ein Nutzer-Mittel (MMS UA) aufweist, welches eine Speicherung eines Multimedia-Nachricht-Mehrfachelements vornimmt.

25. System gemäß einem der Ansprüche 15 bis 24,
**dadurch gekennzeichnet, dass** die Mobilstation ein Anwendungs-Mittel (USAT) aufweist, welches eine Speicherung eines Multimedia-Nachricht-Mehrfachelements organisiert und/oder durchgeführt.

26. System gemäß einem der Ansprüche 15 bis 25,
**dadurch gekennzeichnet, dass** das System geeignet ist, in eine an eine Mobilstation zu sendende Multimedia-Nachricht eine Referenz auf ein Multimedia-Nachricht-Mehrfachelement einzufügen, falls das Multimedia-Nachricht-Mehrfachelement bereits in der Mobilstation gespeichert ist.

27. System gemäß einem der Ansprüche 16 bis 28,
**dadurch gekennzeichnet, dass** die Mobilstation ein Nutzer-Mittel (MMS UA) aufweist, welches das Einfügen eines Multimedia-Nachricht-Mehrfachelements vornimmt.

28. System gemäß einem der Ansprüche 15 bis 27,
**dadurch gekennzeichnet, dass** die Mobilstation ein Anwendungs-Mittel (USAT) aufweist, welches das Einfügen eines Multimedia-Nachricht-Mehrfachelements organisiert und/oder durchgeführt.

29. Mobilstation zur Verwendung bei einem Verfahren nach einem der Ansprüche 1 bis 14.

30. Mobilstation zur Verwendung in einem System nach einem der Ansprüche 15 bis 28.

## Claims

1. Method for inserting at least one multimedia message multiple element into a multimedia message, having the following method steps
- transmit at least one multimedia message multiple element from a network element (MMS RS) to a mobile station (MS),
- transmit a first multimedia message from the network element (MMS RS) to the mobile station (MS), and
- insert the multimedia message multiple element into the first multimedia message, whereby the multimedia message multiple element is sent only once from the network element (MMS RS) to the mobile station (MS) and is inserted in the mobile station (MS) into numerous multimedia messages transmitted to the mobile station (MS).

2. Method in accordance with claim 1
**characterised in that**
the insertion is effected in the mobile station (MS).

3. Method in accordance with one of the preceding claims
**characterised in that**
the multimedia message multiple element is contained in the first multimedia message which is transmitted.

4. Method in accordance with one of the preceding claims
**characterised in that**
the multimedia message multiple element is contained in a second multimedia message which is transmitted.

5. Method in accordance with one of the preceding claims
**characterised in that**
numerous multimedia message multiple elements are transmitted from the network element (MMS RS) to the mobile station (MS) in one multimedia message.

6. Method in accordance with one of the preceding claims
**characterised in that**
a multimedia message has a first data field which makes it possible to distinguish different multimedia message multiple elements.

7. Method in accordance with one of the preceding claims
**characterised in that**
a multimedia message has a second data field by which a multimedia message multiple element can be assigned to a message group.

8. Method in accordance with one of the claims 6 or 7
**characterised in that**
the data in the multimedia message data field is appended in the network element (MMS RS).

9. Method in accordance with one of the preceding claims
**characterised in that**
the multimedia message has a third data field which contains data indicating whether the multimedia message is to be presented to the user of the mobile station (MS).

10. Method in accordance with one of the preceding claims
**characterised in that**
storage of a multimedia message multiple element is carried out in the mobile station by a user facility (MMS UA).

11. Method in accordance with one of the preceding claims
**characterised in that**
storage of a multimedia message multiple element is organised and/or carried out in the mobile station by an application facility (USAT).

12. Method in accordance with one of the preceding claims
**characterised in that**
if a multimedia message multiple element is already stored in a mobile station, a reference to this multimedia message multiple element is inserted into a multimedia message which is to be sent to the mobile station.

13. Method in accordance with one of the preceding claims
**characterised in that**
the insertion of a multimedia message multiple element is undertaken in the mobile station by a user facility (MMS UA).

14. Method in accordance with one of the preceding claims
**characterised in that**
the insertion of a multimedia message multiple element is organised and/or carried out in the mobile station by an application facility (USAT).

15. System for inserting at least one multimedia message multiple element into a multimedia message, having
- facilities for transmitting at least one multimedia message multiple element from a network element (MMS RS) to a mobile station (MS),
- facilities for transmitting a first multimedia message from the network element (MMS RS) to the mobile station (MS), and
- facilities for inserting the multimedia message multiple element into the first multimedia message, where the system is such that it can transmit the multimedia message multiple element once only from the network element (MMS RS) to the mobile station (MS) and can insert it in the mobile station (MS) into numerous multimedia messages transmitted to the mobile station (MS).

16. System in accordance with claim 15
**characterised in that**
the mobile station is such as to enable the insertion to be made in it.

17. System in accordance with one of the claims 15 or 16
**characterised in that**
the multimedia message multiple element is contained in the first multimedia message which is sent.

18. System in accordance with one of the claims 15 to 17
**characterised in that**
the multimedia message multiple element is contained in a second multimedia message which is sent.

19. System in accordance with one of the claims 15 to 18
**characterised in that**
the system is such that numerous multimedia message multiple elements can be transmitted from the network element (MMS RS) to the mobile station (MS) in one multimedia message.

20. System in accordance with one of the claims 15 to 19
**characterised in that**
a multimedia message has a first data field which makes it possible to distinguish different multimedia message multiple elements.

21. System in accordance with one of the claims 15 to 20
**characterised in that**
a multimedia message has a second data field by which a multimedia message multiple element can be assigned to a message group.

22. System in accordance with one of the claims 20 or 21
**characterised in that**
the system is such that the data in the multimedia message data field can be appended in the network element (MMS RS).

23. System in accordance with one of the claims 15 to 22
**characterised in that**
the multimedia message has a third data field which contains data indicating whether the multimedia message is to be presented to the user of the mobile station (MS).

24. System in accordance with one of the claims 15 to 23
**characterised in that**
the mobile station has a user facility (MMS UA) which undertakes the storage of a multimedia message multiple element.

25. System in accordance with one of the claims 15 to 24
**characterised in that**
the mobile station has an application facility (USAT) which organises and/or carries out the storage of a multimedia message multiple element.

26. System in accordance with one of the claims 15 to 25
**characterised in that**
the system is such that if a multimedia message multiple element is already stored in a mobile station, it can insert a reference to this multimedia message multiple element into a multimedia message which is to be sent to the mobile station.

27. System in accordance with one of the claims 16 to 28
**characterised in that**
the mobile station has a user facility (MMS UA) which undertakes the insertion of a multimedia message multiple element.

28. System in accordance with one of the claims 15 to 27
**characterised in that**
the mobile station has an application facility (USAT) which organises and/or carries out the insertion of a multimedia message multiple element.

29. Mobile station for use with a method in accordance with one of the claims 1 to 14.

30. Mobile station for use in a system in accordance with one of the claims 15 to 28.

## Revendications

1. Procédé pour insérer au moins un élément multiple de message multimédia dans un message multimédia, présentant les étapes de procédé suivantes
- envoi d'au moins un élément multiple de message multimédia d'un élément de réseau (MMS RS) à une station mobile (MS),
- envoi d'un premier message multimédia de l'élément de réseau (MMS RS) à la station mobile (MS), et
- insertion de l'élément multiple de message multimédia dans le premier message multimédia, l'élément multiple de message multimédia étant envoyé seulement une fois de l'élément de réseau (MMS RS) à la station mobile (MS) et étant inséré à la station mobile (MS) dans une pluralité de messages multimédia envoyés à la station mobile (MS).

2. Procédé selon la revendication 1,
**caractérisé en ce que** l'insertion s'effectue à la station mobile (MS).

3. Procédé selon l'une quelconque des revendications précédentes, **caractérisé en ce que** l'élément multiple de message multimédia est inclus dans le premier message multimédia envoyé.

4. Procédé selon l'une quelconque des revendications précédentes, **caractérisé en ce que** l'élément multiple de message multimédia est inclus dans un second message multimédia envoyé.

5. Procédé selon l'une quelconque des revendications précédentes, **caractérisé en ce qu'**une pluralité d'éléments multiples de message multimédia est envoyée dans un message multimédia de l'élément de réseau (MMS RS) à la station mobile (MS).

6. Procédé selon l'une quelconque des revendications précédentes, **caractérisé en ce qu'**un message multimédia présente un premier champ d'information qui permet la différenciation de différents éléments multiples de message multimédia.

7. Procédé selon l'une quelconque des revendications précédentes, **caractérisé en ce qu'**un message multimédia présente un second champ d'information par lequel un élément multiple de message multimédia peut être attribué à un groupe de messages.

8. Procédé selon l'une quelconque des revendications 6 ou 7, **caractérisé en ce que** l'information du champ d'information du message multimédia est ajoutée dans l'élément de réseau (MMS RS).

9. Procédé selon l'une quelconque des revendications précédentes, **caractérisé en ce que** le message multimédia présente un troisième champ d'information qui contient l'information que le message multimédia doit être présenté à l'utilisateur de la station mobile (MS).

10. Procédé selon l'une quelconque des revendications précédentes, **caractérisé en ce qu'**un stockage d'un élément multiple de message multimédia est effectué à la station mobile par un moyen d'utilisateur (MMS UA).

11. Procédé selon l'une quelconque des revendications précédentes, **caractérisé en ce qu'**un stockage d'un élément multiple de message multimédia est organisé et/ou effectué à la station mobile par un moyen d'application (USAT).

12. Procédé selon l'une quelconque des revendications précédentes, **caractérisé en ce qu'**une référence à un élément multiple de message multimédia est insérée dans un message multimédia envoyé à une station mobile dans le cas où l'élément multiple de message multimédia est déjà stocké à la station mobile.

13. Procédé selon l'une quelconque des revendications précédentes,
**caractérisé en ce que** l'insertion d'un élément multiple de message multimédia est effectuée à la station mobile par un moyen d'utilisateur (MMS UA).

14. Procédé selon l'une quelconque des revendications précédentes,
**caractérisé en ce que** l'insertion d'un élément multiple de message multimédia est organisée et/ou effectuée à la station mobile par un moyen d'application (USAT).

15. Système pour insérer au moins un élément multiple de message multimédia dans un message multimédia, présentant
- des moyens pour envoyer au moins un élément multiple de message multimédia d'un élément de réseau (MMS RS) à une station mobile (MS),
- des moyens pour envoyer un premier message multimédia de l'élément de réseau (MMS RS) à la station mobile (MS), et
- des moyens pour insérer l'élément multiple de message multimédia dans le premier message multimédia, le système étant approprié pour envoyer l'élément multiple de message multimédia seulement une fois de l'élément de réseau (MMS RS) à la station mobile (MS) et pour l'insérer à la station mobile (MS) dans une pluralité de messages multimédia envoyés à la station mobile (Ms).

16. Système selon la revendication 15,
**caractérisé en ce que** la station mobile est appropriée pour que l'insertion s'effectue sur elle.

17. Système selon l'une quelconque des revendications 15 ou 16,
**caractérisé en ce que** l'élément multiple de message multimédia est inclus dans le premier message multimédia envoyé.

18. Système selon l'une quelconque des revendications 15 à 17,
**caractérisé en ce que** l'élément multiple de message multimédia est inclus dans un second message multimédia envoyé.

19. Système selon l'une quelconque des revendications 15 à 18,
**caractérisé en ce que** le système est approprié pour envoyer une pluralité d'éléments multiples de message multimédia dans un message multimédia de l'élément de réseau (MMS RS) à la station mobile (MS).

20. Système selon l'une quelconque des revendications 15 à 19,
**caractérisé en ce qu'**un message multimédia présente un premier champ d'information qui permet la différenciation de différents éléments multiples de message multimédia.

21. Système selon l'une quelconque des revendications 15 à 20,
**caractérisé en ce qu'**un message multimédia présente un second champ d'information par lequel l'élément multiple de message multimédia peut être attribué à un groupe de messages.

22. Système selon l'une quelconque des revendications 20 ou 21,
**caractérisé en ce que** le système est approprié pour ajouter l'information du champ d'information du message multimédia dans l'élément de réseau (MMS RS).

23. Système selon l'une quelconque des revendications 15 à 22,
**caractérisé en ce que** le message multimédia présente un troisième champ d'information qui contient l'information si le message multimédia doit être présenté à l'utilisateur de la station mobile (MS).

24. Système selon l'une quelconque des revendications 15 à 23,
**caractérisé en ce que** la station mobile présente un moyen d'utilisateur (MMS UA) qui effectue un stockage d'un élément multiple de message multimédia.

25. Système selon l'une quelconque des revendications 15 à 24,
**caractérisé en ce que** la station mobile présente un moyen d'application (USAT) qui organise et/ou effectue un stockage d'un élément multiple de message multimédia.

26. Système selon l'une quelconque des revendications 15 à 25,
**caractérisé en ce que** le système est approprié pour insérer une référence à un élément multiple de message multimédia dans un message multimédia à envoyer à une station mobile dans le cas où l'élément multiple de message multimédia est déjà stocké à la station mobile.

27. Système selon l'une quelconque des revendications 16 à 28,
**caractérisé en ce que** la station mobile présente un moyen d'utilisateur (MMS UA) qui effectue l'insertion d'un élément multiple de message multimédia.

28. Système selon l'une quelconque des revendications 15 à 27,
**caractérisé en ce que** la station mobile présente un moyen d'application (USAT) qui organise et/ou effectue l'insertion d'un élément multiple de message multimédia.

29. Station mobile pour une utilisation dans un procédé selon l'une quelconque des revendications 1 à 14.

30. Station mobile pour une utilisation dans un système selon l'une quelconque des revendications 15 à 28.
